# EUROPÄISCHE PATENTSCHRIFT

(11) **EP 0 308 579 B1**
(45) Veröffentlichungstag und Bekanntmachung des Hinweises auf die Patenterteilung: **04.08.1993**
(21) Anmeldenummer: 88107147.6
(22) Anmeldetag: 04.05.1988
(51) Int. Cl.: G05B 9/02, G05D 23/19

(54) **Begrenzer für Werte von Zustandsgrössen**
Limiting device for the values of variables
Limiteur de valeurs pour des variables

(30) Priorität: 23.09.1987 CH 3667/87
(43) Veröffentlichungstag der Anmeldung: 29.03.1989
(73) Patentinhaber: Landis & Gyr Business Support AG, 6301 Zug (CH)
(72) Erfinder: Bösch, Heinz, CH-6343 Rotkreuz (CH)
(74) Vertreter: Müller, Hans-Jürgen, Dipl.-Ing.

(56) Entgegenhaltungen:
- DE-A- 2 158 729
- DE-A- 2 827 843
- DE-A- 3 532 229

## Beschreibung

Die Erfindung bezieht sich auf einen Begrenzer für Werte von Zustandsgrössen, welche die Sicherheit einer Anlage beeinträchtigen können, nach dem Oberbegriff des Anspruchs 1.

Viele Anlagen sind nur bis zu bestimmten Grenzwerten, also in einem Gebrauchsbereich der Zustandsgrössen der darin benutzten Mittel, betreibbar. Werden diese Grenzwerte überschritten (gegebenenfalls unterschritten), kann dies zur Schädigung der Anlage führen. Das Überschreiten solcher Grenzwerte muss somit verhindert werden. Findet ein solches Überschreiten statt, muss sich die Anlage oder der die gefährliche Veränderung der Zustandsgrösse eines Mittels verursachende Anlageteil unverzüglich ausser Betrieb setzen und sich die entsprechende Zustandsgrösse wieder in den sicheren Bereich zurückführen lassen. Ausserdem muss die Anlage ausser Betrieb gesetzt werden, wenn im Begrenzer ein Fehler auftritt, der die sichere Messung der Zustandsgrössen verunmöglicht. Viele Anlagen oder Anlageteile dürfen aus Sicherheitsgründen nach einer Ausserbetriebsetzung nur durch einen willentlichen, beispielsweise von Hand eingegebenen Befehl wieder in Betrieb genommen werden.

In der DE-A- 35 32 229 ist ein elektronischer Sicherheitstemperaturbegrenzer für eine Heizungsanlage beschrieben, mit einem sich selbst überwachenden Regler, der auf Relais wirkt, welche die Wärmeerzeugung in der Anlage abschalten. Der Regler enthält einen Temperatursensor als Istwertgeber, einen damit verbundenen oszillierenden Sollwertgeber, einen Schwellwertformer zur Bildung eines von der Temperatur abgeleiteten Signals, das ein dynamisches Temperatursignal ist, d. h. ein Signal, das innerhalb des sicheren Bereichs der Temperatur eine wechselnde Spannung aufweist. Wird dieser Bereich überschritten oder tritt ein Unterbruch am Temperatursensor auf, beziehungsweise wird dieser Bereich unterschritten oder ist der Temperatursensor kurzgeschlossen, so wird vom Schwellwertformer jeweils ein Gleichspannungssignal gebildet. Eine als Ansteuerung nachgeschaltete Kondensator-Umladeschaltung bildet einen Sicherheitsausgang, eine Trigger-Schaltung einen Verriegelungsausgang, die beide auf die obengenannten Relais wirken. Diese sind angezogen, so lange die im sicheren Bereich der Temperatur auftretenden wechselnden Spannungen vorliegen. Nachdem der wärmeerzeugende Teil der Anlage durch den Sicherheits- und den Verriegelungsausgang bei Vorliegen eines Gleichspannungssignals bei Überschreiten des sicheren Temperaturbereichs bzw. bei Unterbruch des Temperatursensors ausgeschaltet wurde, muss der Verriegelungsausgang durch Betätigen von die willentliche Inbetriebnahme bewirkende Schaltmittel, hier eine Handtaste, wieder in Betrieb gesetzt werden. Ein Unterschreiten des sicheren Temperaturbereiches oder ein Kurzschluss am Temperatursensor gilt nicht als die Sicherheit beeinträchtigender Fehler, die Wiederinbetriebnahme nach ihrer Beseitigung wird durch die Ausgänge selbst veranlasst.

Der Erfindung liegt die Aufgabe zugrunde, einen Begrenzer für beliebige, auch mehrere Zustandsgrössen zu schaffen und ihn so zu verbessern, dass er mit einem einzigen Ausgang arbeitet, der beim Über- oder Unterschreiten der Grenzwerte der Zustandsgrössen oder bei Unterbruch oder Kurzschluss an den Sensoren die Anlageteile, welche die Veränderungen der Zustandsgrössen bewirken, ausschaltet und für diejenigen Zustandsgrössen, welche für die Sicherheit der Anlage wesentlich sind, verriegelbar ist, d. h., dass nach einem aus Sicherheitsgründen vorgenommenen Ausschalten die Anlage nur willentlich wieder eingeschaltet werden kann.

Diese Aufgabe wird erfindungsgemäss durch die im Kennzeichen des Anspruchs 1 angegebenen Merkmale gelöst. Weitere Ansprüche betreffen vorteilhafte Ausführungsformen.

Ein Ausführungsbeispiel der Erfindung ist in der Zeichnung dargestellt und wird im folgenden näher beschrieben.

Es zeigen
- Fig. 1: ein Blockschaltbild einer Anlage mit einem Begrenzer, in dem zwei Zustandsgrössen verarbeitet werden,
- Fig. 2: ein Schaltbild eines Schwellwertschalters und
- Fig. 3: ein Schaltbild einer Steuerungseinheit, die über einen zur Anlagesteuerung verwendeten Mikrocomputer an ein UND-Tor angeschlossen ist.

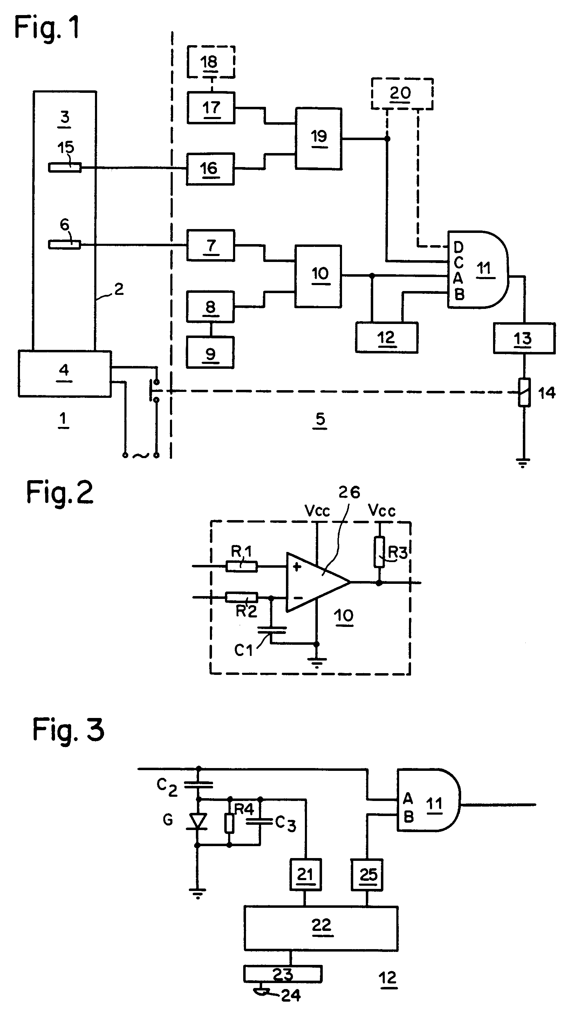

Eine in der Fig. 1 dargestellte Anlage 1 besitzt einen Anlageteil 2, in dem Mittel 3 vorhanden sind, von denen mindestens eine Zustandsgrösse die Sicherheit der Anlage 1 beeinträchtigen kann, wenn über eine steuerbare Einrichtung 4 diese Zustandsgrösse übermässig ansteigt (oder abfällt). Die Sicherheit der Anlage 1 wird durch einen als Begrenzer 5 wirkenden selbstüberwachenden Regler gewährleistet, der die Einrichtung 4 in diesem Fall abschaltet und dessen Aufbau im folgenden beschrieben ist.

Die Zustandsgrösse, welche die Sicherheit der Anlage beeinträchtigen kann, wird mit einem im Anlageteil 2 befindlichen Sensor 6 gemessen, der mit einem Istwertgeber 7 verbunden ist. Weiter ist ein Sollwertgeber 8 vorhanden, der von einem Sollwertformer 9, beispielsweise einem Oszillator, gespeist wird. Die Signale des Istwertgebers 7 und des Sollwertgebers 8 werden in einem Schwellwertformer 10 zusammengeführt. Der Ausgang des Schwellwertformers 10 wird einerseits direkt einem Eingang A eines UND-Tors 11 zugeleitet, andererseits nach Durchgang durch eine Steuereinheit 12 einem Eingang B des UND-Tors 11 zugeführt. Der Ausgang des UND-Tors 11 wird über ein Anpassglied 13 und über die Erregerspule eines als Schaltelement dienenden Relais 14 zur Masse geleitet. Das Relais 14 schaltet die Einrichtung 4 aus, wenn kein UND-Zustand am UND-Tor 11 vorliegt, also nicht alle UND-Eingänge hoch liegen.

Gegebenenfalls sind noch andere Sensoren 15, mit denen die gleichen oder andere Zustandsgrössen gemessen werden, andere Istwertgeber 16, andere Sollwertgeber 17 und andere Schwellwertformer 19 im Begrenzer 5 vorhanden. Falls die damit zu messenden Zustandsgrössen ebenfalls Werte annehmen können, welche die Sicherheit der Anlage 1 gefährden und die durch Abschalten der Einrichtung 4 wieder in den sicheren Bereich zurückgeführt werden können, sind für jede Zustandsgrösse zusätzlich ein anderer Sollwertformer 18 und eine andere Steuereinheit 20 vorzusehen. Diese beiden Baugruppen sind, da sie nur fakultativ vorhanden sind, gestrichelt dargestellt. Solche Baugruppen, gegebenenfalls auch einfache Tasten als Signalgeber, können aber auch getrennt vom Begrenzer 5 direkt an das UND-Tor 11 angeschlossen sein.

Jeder Satz dieser anderen Baugruppen werden wie die Baugruppen 6 - 10 und 12 zusammengeschaltet. Die von den betreffenden Schwellwertformern 19 abgegebenen Signale werden auf betreffende Eingänge, in der Fig. 1 beispielsweise auf einen Eingang C bzw. D, des UND-Tors 11 geführt. Mit solchen Begrenzern lassen sich einerseits dieselbe Zustandsgrösse sowohl regeln als auch auf die Sicherheit überwachen, andererseits verschiedene Zustandsgrössen, die alle durch Betätigung der Einrichtung 4 veränderbar sind, regeln und auf die Sicherheit überwachen.

Der Begrenzer 5 arbeitet folgendermassen:
Im sicheren Bereich liegt die vom Sensor 6 und vom Istwertgeber 7 als Messwert der Zustandsgrösse bestimmte Spannung V bei einer vorgegebenen Polarität des Sensors 6 beispielweise zwischen einer Maximalspannung Vo an der Untergrenze und einer Minimalspannung Vu an der Obergrenze des sicheren Bereichs. Ist der Sensor 6 durch einen Fehler kurzgeschlossen, so gibt er beispielsweise eine Spannung V < Vu ab, ist der Sensor 5 unterbrochen, so gibt er eine Spannung V > Vo ab. Es kann auch eine andere Zuteilung vorliegen, sie lässt sich aber durch entsprechende Änderungen im Begrenzer 5 stets zweckentsprechend ausnutzen. Der Istwertgeber 7 darf jedenfalls nur dann eine Spannung V im Bereich Vu < V < Vo abgeben, wenn die Zustandsgrösse des Mittels 3 in der Anlage 1 im sicheren Bereich liegt und sie zuverlässig messbar ist.

Durch die Speisung mit dem Sollwertformer 9 gibt der Sollwertgeber 8 ein geformtes, sich stets wiederholendes Signal ab, das beispielsweise ein Signal wechselnder Spannung ist. Wird er z. B. mit Rechteckimpulsen gespeist, so lässt sich die Ausgangsspannung des Sollwertgebers 8 so einrichten, dass sie als Rechteckspannung alternierend die Werte Vo und Vu annimmt.

Die vom Istwertgeber 7 und vom Sollwertgeber 8 kommenden Signale werden dem Schwellwertformer 10 zugeführt. Dieser besteht beispielsweise nach der Fig. 2 aus einem Komparator 26, der durch eine Versorgungsspannung Vcc gespeist wird, an dessen nicht invertierenden Eingang über einen Widerstand R1 der Ausgang des Sollwertgebers 8 (Fig. 1) und an dessen invertierenden Eingang über einen Widerstand R2 der Ausgang des Istwertgebers 7 (Fig. 1) sowie ein an Masse liegender Kondensator C1 geschaltet sind. An seinem Ausgang liegt über ein Widerstand R3 eine Versorgungsspannung Vcc.

Der Schwellwertformer 10 gibt eine hohe Spannung ab, wenn der Ausgang des Istwertgebers 7 höher ist als der des Sollwertgebers 8, andernfalls die Spannung Null, somit eine tiefe Spannung. Dies umfasst drei Fälle:
- Der Ausgang des Istwertgebers 7 ist kleiner als Vu. Dann erreicht er nie den Wert des Sollwertgebers 8, der Ausgang des Schwellwertformers 10 bleibt ständig tief. Im beschriebenen Fall liegt dies vor, wenn sich die Zustandsgrösse des Mittels 3 über dem sicheren Bereich befindet oder wenn am Sensor 6 ein Unterbruch vorliegt.
- Der Ausgang des Istwertgebers 7 liegt zwischen Vu und Vo. Dann springt die Ausgangsspannung des Schwellwertformers 10 im Takt der Oszillationen des Ausgangs des Sollwertgebers 8 von tief auf hoch und wieder zurück, stellt also eine wechselnde Spannung dar.
- Der Ausgang des Istwertgebers 7 ist grösser als Vo. Dann liegt er immer über dem Ausgang des Sollwertgebers 8, der Ausgang des Schwellwertformers 10 bleibt dann ständig hoch. Im beschriebenen Fall liegt dies vor, wenn sich die Zustandsgrösse des Mittels 3 unterhalb des sicheren Bereiches befindet oder der Sensor 6 einen Kurzschluss aufweist.
Im ersten und dritten Fall ist somit der Ausgang des Schwellwertformers 10 eine Gleichspannung, in anderen Fall eine wechselnde Spannung, hier eine Rechteckspannung.

Im Grunde kommt es beim Schwellwertformer 10 nur darauf an, dass für den Fall, dass die Zustandsgrösse des Mittels 3 im sicheren Bereich liegt, das Ausgangssignal des Schwellwertformers 10 eine wechselnde Spannung aufweist, während für den Fall, dass die Zustandsgrösse im nicht-sicheren Bereich liegt oder durch fehlerhafte Messungen entsteht, das Ausgangssignal des Schwellwertformers 10 ein Gleichspannungssignal ist.

In der Fig. 3 sind das UND-Tor 11 und die Steuereinheit 12 dargestellt. Der Eingang der Steuereinheit 12 ist an die 'Verbindung zwischen dem nicht gezeichneten Ausgang des Schwellwertformers 10 und dem Eingang A des UND-Tors 11 angeschlossen. Die Steuereinheit 12 besitzt einen Eingangskondensator C2, der zu einem Gleichrichter G führt, und parallel zum Gleichrichter G geschaltet einen Widerstand R4 und einen Gleichrichtkondensator C3. Von der nicht geerdeten Gleichspannungsseite des Gleichrichters G führt eine Verbindung über einen Analog-Digital-Wandler 21 an einen Mikroprozessor 22, der vorteilhafterweise zur Steuerung der Anlage 1 verwendet und nur in einer Nebenfunktion in die Steuereinrichtung 12 einbezogen wird. Ein Ausgang des Mikroprozessors 22 wird auf "aus" gestellt, wenn dem Analog-Digital-Wandler 21 keine Spannung mehr zugeführt wird. Ein Bedienfeld 23 dieses Mikroprozessors 22 weist eine Taste 24 auf, mit der die Einrichtung 4 (Fig. 1) durch willentliches Tasten in den "ein"-Zustand wieder in Betrieb genommen werden kann. Dieser Befehl geht über ein Ausgangsinterface 25 an den Eingang B des UND-Tors 11 und über das Anpassglied 13 (Fig. 1) an das Relais 14.

Die Steuereinheit 12 übernimmt im sicheren Bereich der Zustandsgrösse über den Eingangskondensator C2 vom Ausgang des Schwellwertformers 10 den Anteil an wechselnder Spannung, während Gleichspannungen nicht übertragen werden. Sie richtet die wechselnde Spannung gleich, wobei die Zeitkonstante des aus dem Widerstand R4 und dem Gleichrichterkondensators C3 gebildeten RC-Glieds so gross gewählt werden muss, dass der Eingang des Analog-Digital-Wandlers 21 an einer gut geglätteten hohen Gleichspannung liegt. So lange der Analog-Digitalwandler 21 diese Gleichspannung empfängt, wird der vorher durch die Taste 24 in die "ein"-Stellung gebrachte Ausgang des Mikroprozessors 22 in dieser Stellung gehalten. Gibt jedoch der Ausgang des Schwellwertformers 10 eine Gleichspannung ab, weil sich die Zustandsgrösse nicht mehr im sicheren Bereich befindet oder Bauteilfehler aufgetreten sind, so wird an den Analog-Digitalwandler 21 ein Nullsignal geliefert und die Taste 24 in die "aus"-Stellung gebracht. Aus der "aus"-Stellung kann die Taste nur durch Handbetätigung wieder in die "ein"-Stellung gebracht werden. Befindet sich die Taste 24 in der "ein"-Stellung, so liegt am Eingang B des UND-Tors 11 ein hohes Signal, befindet sie sich in der "aus"-Stellung, so liegt am Eingang B des UND-Tors ein tiefes Signal.

Ganz allgemein besitzt die Steuereinheit 12 einen nur für wechselnde Spannungen empfindlichen Eingang und eine Gleichrichterschaltung G, C3, R4, die eine genügend geglättete Gleichspannung erzeugt, so lange die wechselnde Spannung anliegt, und die in ihrer Verbindung zu dem UND-Tor 11 eine Verriegelung aufweist, die bei dem Übergang zu dem nicht sicheren Bereich der Zustandsgrösse diese Gleichspannungszuleitung unterbricht, wobei diese Verriegelung nur willentlich, beispielsweise durch die Taste 24, zurücksetzbar ist.

Am UND-Tor 11 können UND-Bedingungen nur vorliegen, so lange die Zustandsgrösse des Mittels 3 sich im sicheren Bereich befindet, der Schwellwertformer 10 also eine wechselnde Spannung liefert. Im allen übrigen Fällen liefert der Schwellwertformer 10 ja eine Gleichspannung, so dass die Steuereinheit 12 an den Eingang B des UND-Tors 11 ein tiefes Signal liefert. Da aber im Falle, dass sich die Zustandsgrösse im sicheren Bereich befindet, die am Eingang A des UND-Tors 11 liegende Ausgangsspannung des Schwellwertformers 10 eine wechselnde Spannung ist, wird, so lange die Zustandsgrösse im sicheren Bereich ist, auch am Ansgang des UND-Tors 11 eine wechselnde Spannung, in allen anderen Fällen eine Nullspannung abgegeben.

Das an den Ausgang des UND-Tors 11 geschaltete Anpassglied 13 sorgt dafür, dass das Relais 14 nur angezogen bleibt, folglich die Einrichtung 4 arbeitet, so lange vom Ausgang des UND-Tors 11 eine wechselnde Spannung geliefert wird, also die Zustandsgrösse im sicheren Bereich liegt.

Soll in der Anlage 1 dieselbe Zustandsgrösse zusätzlich für normale Regelungsaufgaben gemessen werden, kann in nicht gezeichneter Weise der Istwertgeber 6 und ein zweiter Sollwertgeber 17 mit einem zweiten Schwellwertformer 19 verbunden werden. Der Schwellwertformer 19 liefert ein hohes Signal an den Eingang C des UND-Tors 11, so lange die Zustandsgrösse unterhalb der Regelgrenze liegt, ein tiefes Signal, wenn sie darüber liegt. Entsprechend schaltet das Relais 14 die Einrichtung 4 an den Regelgrenzen ab und an. Nur, wenn in dieser Regelung eine Störung auftritt und die Zustandsgrösse bis zu dem Wert ansteigt, der die Sicherheit der Anlage 1 gefährdet, schaltet der oben beschriebenen Teil 6 - 12 des Begrenzers 5 als Sicherheitsschalter den Anlageteil 4 über das Relais 14 ab und verhindert eine Beschädigung der Anlage 1.

Sind andere für die Abschaltung der Einrichtung 4 wichtige Zustandsgrössen zu messen, die ebenfalls über die Einrichtung 4 verändert werden können, so lassen sich aus je einem anderen Sensor 15, einem anderen Istwertgeber 16, einem anderen Sollwertgeber 17 und einem anderen Schwellwertformer 19 weitere Messkanäle aufbauen, deren Ausgänge dem UND-Tor 11 zugeführt werden. Sollen diese Kanäle verriegelungsfähig sein, so müssen jeweils noch ein anderer Sollwertformer 18 und eine andere Steuereinheit 12 dazugefügt werden, was je einen Verriegelungsausgang für den entsprechenden Messkanal ergibt. Dabei lassen sich auch nur ein allen Messkanälen gemeinsamer Sollwertformer 9 und ein einziger Mikroprozessor 22 benutzen. Die Ausgänge werden an entsprechende Eingänge mit höheren Bezugszeichen C, D, ... des UND-Tors 11 gelegt.

Mit dem beschriebenen Begrenzer 5 kann mindestens eine Zustandsgrösse von Mitteln 3 in einer Anlage 1, die über eine einzige Einrichtung 4 veränderbar sind, im sicheren Bereich gehalten werden. Er wirkt auf ein einziges Relais 14. Mit diesem Begrenzer 5 wird nach Abschalten der den Zustand eines Mittels 3 ändernden Einrichtung 4, wenn dieses in einen Zustand gekommen ist, der die Sicherheit beeinträchtigt, diese so verriegelt, dass sie sich nur willentlich wieder anschalten lässt, nachdem die überwachte Zustandsgrösse in den sicheren Bereich zurückgekommen ist. Es können mit einem einzigen Begrenzer 5 mehrerer Zustandsgrössen auf den sicheren Zustand überwacht und geregelt werden, wenn ihre Änderung durch An- und Abschalten einer einzigen Einrichtung 4 bewirkbar ist. Die Anlage wird in der Regeltechnik verwendet, wobei die Anlage 1 eine Heizungsanlage, die Einrichtung 4 ein Brenner, das Mittel 3 das Wärmeübertragungsmittel, beispielsweise Wasser, und die Zustandsgrösse die Temperatur sein kann.

## Patentansprüche

1. Begrenzer (5) für einen die Sicherheit einer Anlage (1) beeinträchtigenden Wert mindestens einer Zustandsgrösse, mit einem sich selbst überwachenden Regler, der auf ein Schaltelement (14) wirkt, das eine Einrichtung (4), welche die Zustandsgrösse verändert, bei einem die Sicherheit der Anlage beeinträchtigenden Wert dieser Zustandsgrösse oder einem Fehlerzustand des Begrenzers (5) abschaltet, wobei der Regler einen Sensor (6) zur Messung der Zustandgröße, einen Istwertgeber (7), einen Sollwertgeber (8), einen Sollwertformer (9), einen Schwellwertformer (10) zur Bildung eines Signales, das in einem sicheren Bereich der Zustandsgrösse eine wechselnde Spannung aufweist, ausserhalb des sicheren Bereiches eine Gleichspannung aufweist, und für die Betätigung des Schaltelements (14) ein Anpassglied (13) enthält, dadurch gekennzeichnet, dass der Begrenzer (5) ein UND-Tor (11) und eine zwischen den Schwellwertformer (10) und das UND-Tor (11) geschaltete Steuereinheit (12) enthält, die den vom Schwellwertformer (10) im sicheren Bereich gelieferten Anteil an wechselnder Spannung in ein Gleichspannungssignal wandelt, dass der Schwellwertformer (10) im sicheren Bereich ein Signal wechselnder Spannung an einen ersten Eingang (A) des UND-Tors (11) und die Steuereinheit (12) ein Gleichspannungssignal an den zweiten Eingang (B) des UND-Tors (11) abgibt, wobei im sicheren Bereich der Zustandsgrösse das UND-Tor (11) eine wechselnde Spannung, in allen anderen Fällen eine Nullspannung abgibt, dass die Steuereinheit (12) eine Verriegelung aufweist, mit der die vom Begrenzer (5) abgeschaltete Einrichtung (4) nur wieder willentlich einschaltbar ist, und dass der Ausgang des UND-Tors (11) mit dem Anpassglied (13) verbunden ist.

2. Begrenzer nach Anspruch 1, dadurch gekennzeichnet, dass die Steuereinheit (12) einen Eingangskondensator (C2) zur Übernahme des Anteils an wechselnder Spannung vom Ausgang des Schwellwertformers (10) sowie eine Gleichrichterschaltung (G, R4, C3) enthält.

3. Begrenzer nach Anspruch 2, dadurch gekennzeichnet, dass die Verriegelung in der Verbindung zwischen dem Ausgang der Gleichrichterschaltung (G, R4, C3) der Steuereinheit (12) und dem Eingang des UND-Tors (11) liegt, dass diese Verriegelung beim Übergang in den nicht sicheren Bereich der Zustandsgrösse diese Verbindung unterbricht, und diese Verriegelung nur willentlich zurücksetzbar ist.

4. Begrenzer nach Anspruch 3, dadurch gekennzeichnet, dass die Verriegelung durch einen in der Anlage (1) zu deren Steuerung angeordneten Mikrocomputer (21 bis 25) ausführbar ist.

5. Begrenzer nach einem der Ansprüche 1 bis 4, dadurch gekennzeichnet, dass er sowohl als Regler als auch als Begrenzer für dieselbe Zustandsgrösse ausgebildet ist.

6. Begrenzer nach einem der Ansprüche 1 bis 5, dadurch gekennzeichnet, dass er zur Überwachung mehrerer Zustandsgrössen ausgebildet ist, die alle durch Betätigen der Einrichtung (4) veränderbar sind.

## Claims

1. A limiter (5) for a value of at least one status parameter, which value adversely affects the security or safety of an installation (1), comprising a self-monitoring regulator which acts on a switch element (14) which switches off a device (4) which varies the status parameter at a value of said status parameter which adversely affects the security or safety of the installation or a fault status of the limiter (5), wherein the regulator includes a sensor (6) for measuring the status parameter, an actual value generator (7), a reference value generator (8), a reference value forming means (9), a threshold value forming means (10) for forming a signal which has a changing voltage in a secure or safe range of the status parameter and a dc voltage outside the secure or safe range, and a matching device (13) for actuation of the switch element (14), characterised in that the limiter (5) includes an AND-gate (11) and a control unit (12) which is connected between the threshold value forming means (10) and the AND-gate (11) and which converts the component of changing voltage delivered by the threshold value forming means (10) in the secure or safe range into a dc voltage signal, that in the secure or safe range the threshold value forming means (10) outputs a signal of changing voltage to a first input (A) of the AND-gate (11) and the control unit (12) outputs a dc voltage signal to the second input (B) of the AND-gate (11), wherein in the secure or safe range of the status parameter the AND-gate (11) outputs a changing voltage and in all other situations a zero voltage, that the control unit (12) has a locking means with which the device (4) which is switched off by the limiter (5) can only be deliberately switched on again, and that the output of the AND-gate (11) is connected to the matching device (13).

2. A limiter according to claim 1 characterised in that the control unit (12) includes an input capacitor (C2) for receiving the component of changing voltage from the output of the threshold value forming means (10), and a rectifier circuit (G, R4, C3).

3. A limiter according to claim 2 characterised in that the locking means lies in the connection between the output of the rectifier circuit (G, R4, C3) of the control unit (12) and the input of the AND-gate (11), that said locking means interrupts said connection upon the transition into the non-secure or non-safe range of the status parameter, and said locking means can only be deliberately reset.

4. A limiter according to claim 3 characterised in that the locking action can be performed by a microcomputer (21 to 25) which is arranged in the installation (1) for control thereof.

5. A limiter according to one of claims 1 to 4 characterised in that it is in the form of both a regulator and a limiter for the same status parameter.

6. A limiter according to one of claims 1 to 5 characterised in that it is designed to monitor a plurality of status parameters which are all variable by actuation of the device (4).

## Revendications

1. Limiteur (5) pour une valeur d'au moins une variable d'état altérant la sécurité d'une installation (1), comportant un régulateur se contrôlant lui-même, qui agit sur un élément de commutation (14) qui arrête un dispositif (4) modifiant la variable d'état, dans le cas où cette variable d'état a une valeur altérant la sécurité de l'installation ou bien lorsqu'il existe un état de défaut du limiteur (5), le régulateur comportant un capteur (6) servant à mesurer la variable d'état, un transmetteur de valeur réelle (7), un transmetteur de valeur de consigne (8), un générateur de valeur de consigne (9), un générateur de valeur de seuil (10) pour produire un signal qui a, dans un domaine sûr de la variable d'état, une tension alternative alors qu'en dehors de ce domaine sûr il a une tension continue, et il est prévu pour l'actionnement de l'élément de commutation (14) un organe d'adaption (13), caractérisé en ce que le limiteur (5) comporte une porte-ET (11) ainsi qu'une unité de commande (12), connectée entre le générateur de valeur de seuil (10) et la porte- ET (11) et qui convertit le signal de tension alternative qui est fourni par le générateur de valeur de seuil (10) dans le domaine sûr en un signal de tension continue, en ce que le générateur de valeur de seuil (10) applique, dans le domaine sûr, un signal de tension alternative à une première entrée (A) de la porte-ET (11) tandis que l'unité de commande (12) applique un signal de tension continue à la seconde entrée (B) de la porte-ET (11) alors que, dans le domaine sûr de la variable d'état, la porte-ET (11) fournit une tension alternative et, dans tous les autres cas, une tension nulle, en ce que l'unité de commande (12) comporte un verrouillage à l'aide duquel le dispositif (4) arrêté par le limiteur (5) ne peut être réenclenché qu'intentionnellement et en ce que la sortie de la porte-ET (11) est reliée à l'organe d'adaptation (13).

2. Limiteur selon la revendication 1, caractérisé en ce que l'unité de commande (12) comprend un condensateur d'entrée (C2) pour recevoir le signal de tension alternative provenant de la sortie du générateur de valeur de seuil (10) ainsi qu'un circuit redresseur (G, R4, C3).

3. Limiteur selon la revendication 2, caractérisé en ce que le verrouillage est situé dans la liaison entre la sortie du circuit redresseur (G, R4, C3) de l'unité de commande (12) et l'entrée de la porte-ET (11), en ce que ce verrouillage interrompt ladite liaison lors d'une transition dans le domaine non sûr de la variable d'état et en ce que ce verrouillage ne peut être supprimé qu'intentionnellement.

4. Limiteur selon la revendication 3, caractérisé en ce que le verrouillage peut être produit par un microordinateur (21 à 25) disposé dans l'installation (1) pour sa commande.

5. Limiteur selon une des revendications 1 à 4, caractérisé en ce qu'il est agencé aussi bien comme un régulateur que comme un limiteur pour la même variable d'état.

6. Limiteur selon une des revendications 1 à 5, caractérisé en ce qu'il est conçu pour contrôler plusieurs variables d'état, qui sont toutes modifiables par actionnement du dispositif (4).
